# EUROPÄISCHE PATENTANMELDUNG

(11) **EP 0 854 073 A1**
(43) Veröffentlichungstag der Anmeldung: **22.07.1998**
(21) Anmeldenummer: 98100614.1
(22) Anmeldetag: 15.01.1998
(51) Int. Cl.: B62B 3/14

(54) **Einkaufswagen**

(30) Priorität: 16.01.1997 DE 29700857 U
(71) Anmelder: WANZL METALLWARENFABRIK GMBH, D-89336 Leipheim (DE)
(72) Erfinder: Eberlein, Herbert, 89347 Bubesheim (DE)

(57) **Zusammenfassung**

Die Erfindung betrifft einen stapelbaren Einkaufswagen (1) mit einem Fahrgestell (2), das wenigstens eine Warenabstelleinrichtung (4) trägt, mit einer Schiebeeinrichtung (7) und mit einer Aufnahmevorrichtung (10) zur Aufnahme einer Babyschale (17).
Es wird vorgeschlagen, die Aufnahmevorrichtung (10) für die Babyschale (17) hinter der Warenabstelleinrichtung (4) und unterhalb der Schiebeeinrichtung (7) vorzusehen.

## Beschreibung

Die Erfindung betrifft einen Einkaufswagen mit einem Fahrgestell, das wenigstens eine Warenabstelleinrichtung trägt, mit einer Schiebeeinrichtung und mit einer Aufnahmevorrichtung zur Aufnahme einer Babyschale.

Zum nächstliegenden Stand der Technik zählt ein Einkaufswagen, der in der deutschen Gebrauchsmusterschrift 296 15 793 näher beschrieben ist. Hier wird vorgeschlagen, auf der als Korb gestalteten Warenabstelleinrichtung ein mit einer Umrandung ausgestattetes Aufnahmebehältnis vorzusehen, das zur Aufnahme einer handelsüblichen, als Autokindersitz geeigneten Babyschale geeignet ist. Es ist nachteilig, daß ein Großteil der Zugriffsöffnung zum Korb durch das Aufnahmebehältnis abgedeckt ist und sich deshalb das Be- und Entladen des Korbes mit Ware als umständlich erweist.

Um diesen Mangel nicht entstehen zu lassen wird vorgeschlagen, bei einem gattungsgemäßen Einkaufswagen die Aufnahmevorrichtung für die Babyschale hinter der Warenabstelleinrichtung und unterhalb der Schiebeeinrichtung vorzusehen.

Durch diese Maßnahme bleibt die Zugriffsöffnung zur Warenabstelleinrichtung voll erhalten. Ferner braucht die Babyschale nicht so hoch angehoben werden, da diese sich unterhalb der Schiebeeeinrichtung befindet.
Es ist ferner zweckmäßig, die höchste Erhebung der Aufnahmevorrichtung tiefer anzuordnen als die Warenabstelleinrichtung. Dann nämlich kann die Warenabstelleinrichtung beispielsweise als konischer, mit einer schwenkbaren Rückwand ausgestatteter Korb gestaltet werden, so daß gleiche Einkaufswagen platzsparend ineinanderschiebbar sind. Die Eignung solcher Wagen, sich ineinanderschieben zu lassen, wird zusätzlich gefördert, wenn die Aufnahmevorrichtung aus sich verjüngenden Vorsprüngen besteht, die ineinandergreifen, wenn beispielsweise zwei Einkaufswagen platzsparend ineinandergeschoben werden.

Die Erfindung wird anhand eines Ausführungsbeispieles näher beschrieben. Es zeigt
Fig. 1 einen Einkaufswagen, der zum Tragen einer Babyschale geeignet ist;
Fig. 2 den gleichen Einkaufswagen mit aufgesetzter Babyschale, sowie
Fig. 3 zwei ineinandergeschobene Einkaufswagen.

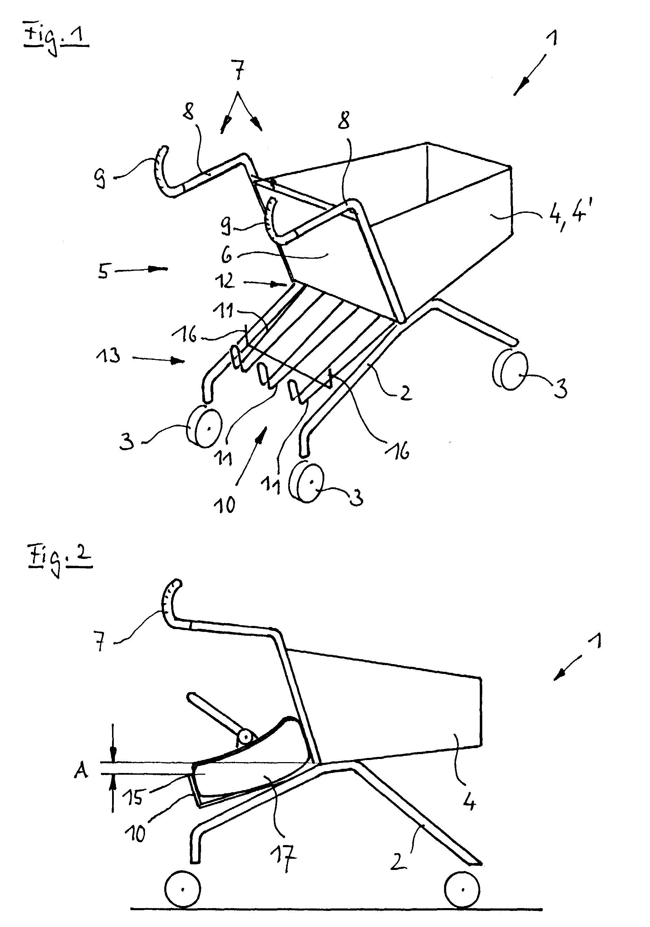

Der in Fig. 1 dargestellte Einkaufswagen 1 weist ein mit Rollen 3 ausgestattetes Fahrgestell 2 auf Das Fahrgestell 2 trägt wenigstens eine Warenabstelleinrichtung 4, die im Beispiel als konischer Korb 4' mit einer an der Rückseite 5 angeordneten schwenkbaren Rückwand 6 gestaltet ist. Solche Körbe 4' sind auch bei bekannten Einkaufswagen 1 vorgesehen. Der Einkaufswagen 1 ist hinten mit einer Schiebeeinrichtung 7 ausgestattet, die hinter der Warenabstelleinrichtung 4 angeordnet ist. Die Warenabstelleinrichtung 4 kann auch durch wenigstens eine flache Schale gebildet oder als Rahmen gestaltet sein, in der wenigstens ein Handkorb zur Aufnahme von Ware abgestellt oder eingehängt werden kann. Von der Schiebeeinrichtung 7 führen zwei Träger 8 nach vorne, die entweder Bestandteil des Fahrgestelles 2 oder der Warenabstelleinrichtung 4 sind. Die Schiebeeinrichtung 7 wird durch zwei Griffe 9 gebildet, wobei je ein Griff 9 an einem Träger 8 vorgesehen ist. Die Griffe 9 können durch eine Querstange, die ebenfalls als Griff benutzbar ist, verbunden sein. Unterhalb der Schiebeeinrichtung 7 ist eine Aufnahmevorrichtung 10 zur Aufnahme einer bekannten, wahlweise auch als Autokindersitz geeigneten Babyschale 17 vorgesehen. Die zumindest größtenteils zwischen den Trägern 8 angeordnete Aufnahmevorrichtung 10 besteht im Beispiel aus Vorsprüngen 11, die bevorzugt aus Draht gefertigt, als Bauteile mit V-förmigem Grundriß gestaltet und in bekannter Weise in Abständen zueinander angeordnet sind, wobei die Vorsprünge 11 mit ihrem breiten Bereich 12 am Fahrgestell 2 oder an der Unterseite der Warenabstelleinrichtung 4 befestigt sind. Die schmäleren Enden 13 der Vorsprünge 11 sind somit am weitesten von der Warenabstelleinrichtung 4 entfernt. Die Vorsprünge 11 ragen nach hinten und sind mit ihren Enden 13 nach oben abgewinkelt, so daß Anschläge gebildet sind, die ein Herabstürzen der Babyschale 17 nach rückwärts verhindern. An der Aufnahmevorrichtung 10 oder am Fahrgestell 2 oder an der Warenabstelleinrichtung 4 können seitliche Anschläge 16 vorgesehen sein, die ein Herabstürzen der Babyschale 17 zur Seite verhindern. Je nach Einkaufswagentyp, Größe und Breite kann die Aufnahmevorrichtung 10 so gestaltet sein, daß die Babyschale 17 entweder längs, wie in Fig. 2 gezeigt, oder auch quer zur Längserstreckung des Einkaufswagens 1 auf der Aufnahmevorrichtung 10 abstellbar ist. Die Vorsprünge 11 können, wie dargestellt, nach hinten abfallend angeordnet sein. Man kann sie aber auch größtenteils horizontal anordnen.

In einer Seitenansicht zeigt Fig. 2 den in Fig. 1 beschriebenen Einkaufswagen 1. Die Aufnahmevorrichtung 10 trägt eine Babyschale 17. Aus der Zeichnung ist ersichtlich, daß die höchste Erhebung 15 der Aufnahmevorrichtung 10 etwas tiefer (Maß A) angeordnet ist als die Warenabstelleinrichtung 4. Dadurch lassen sich gleiche Einkaufswagen 1 platzsparend ineinanderschieben.

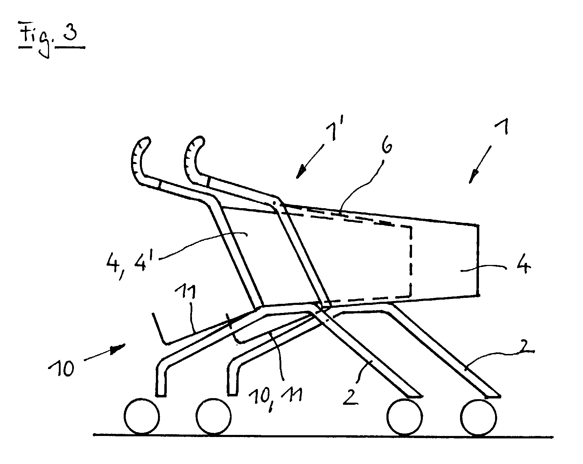

Fig. 3 zeigt anhand zweier Einkaufswagen 1, 1' eine derartige Anordnung. Die als Korb 4' gestaltete Warenabstelleinrichtung 4 des hinteren Einkaufswagens 1 ' ist in die Warenabstelleinrichtung 4 des vorausbefindlichen Einkaufswagens 1 eingeschoben. Die schwenkbare Rückwand 6 des Korbes 4' des vorderen Einkaufswagens 1 ist dabei angehoben. Die nach hinten geneigten Vorsprünge 11 der Aufnahmevorrichtung 10 der beiden Einkaufswagen 1, 1' greifen aufgrund ihrer konischen Ausbildung kammartig ineinander. Auch die Fahrgestelle 2 sind in bekannter Weise konisch so gestaltet, daß ein platzsparendes Ineinanderschieben derartiger Einkaufswagen 1, 1' möglich ist.

Mit dem Begriff 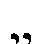 Babyschale" sollen alle bekannten Babytragevorrichtungen verstanden werden, die auf der Aufnahmevorrichtung 10 abstellbar sind. Das Wort 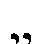 Babyschale" wurde nur deshalb gewählt, weil es sich im allgemeinen Sprachgebrauch als üblich durchgesetzt hat.

## Patentansprüche

1. Einkaufswagen mit einem Fahrgestell, das wenigstens eine Warenabstelleinrichtung trägt, mit einer Schiebeeinrichtung und mit einer Aufnahmevorrichtung zur Aufnahme einer Babyschale, dadurch **gekennzeichnet,** daß die Aufnahmevorrichtung (10) für die Babyschale (17) hinter der Warenabstelleinrichtung (4) und unterhalb der Schiebeeinrichtung (7) vorgesehen ist.

2. Einkaufswagen nach Anspruch 1, dadurch **gekennzeichnet,** daß die Aufnahmevorrichtung (10) aus Vorsprüngen (11) gebildet ist, die in Abständen angeordnet sind.

3. Einkaufswagen nach Anspruch 1 oder 2, dadurch **gekennzeichnet,** daß die Vorsprünge (11) nach hinten ragen und mit ihren Enden nach oben abgewinkelt sind.

4. Einkaufswagen nach einem der Anspräche 1 bis 3, dadurch **gekennzeichnet,** daß der Grundriß der Vorsprünge (11) V-förmig ausgebildet ist und daß die Vorsprünge (11) mit ihrem breiten Bereich (12) entweder an der Unterseite der Warenabstelleinrichtung (4) oder am Fahrgestell (2) befestigt sind.

5. Einkaufswagen nach einem der Ansprüche 1 bis 4, dadurch **gekennzeichnet,** daß die Vorsprünge (11) nach hinten abfallend angeordnet sind.

6. Einkaufswagen nach einem der Ansprüche 1 bis 5, dadurch **gekennzeichnet,** daß die höchste Erhebung (15) der Aufnahmevorrichtung (10) tiefer angeordnet ist als die Warenabstelleinrichtung (4).

7. Einkaufswagen nach einem der Ansprüche 1 bis 6, dadurch **gekennzeichnet,** daß seitliche Anschläge (16) zum Stützen der Babyschale (17) vorgesehen sind.

8. Einkaufswagen nach einem der Ansprüche 1 bis 7, dadurch **gekennzeichnet,** daß die Babyschale (17) entweder längs oder quer zur Längserstreckung des Einkaufswagens (1) auf der Aufnahmevorrichtung (10) abstellbar ist.

9. Einkaufswagen nach einem der Ansprüche 1 bis 8, dadurch **gekennzeichnet,** daß die Vorsprünge (11) in ineinandergeschobenem Zustand mehrerer Einkaufswagen (1, 1') ineinander greifen.
